# EUROPEAN PATENT APPLICATION

(11) **EP 4 183 816 A1**
(43) Date of publication of application: **24.05.2023**
(21) Application number: 21209092.2
(22) Date of filing: 18.11.2021
(51) Int. Cl.: C08G 77/12, C08G 77/14, C08G 77/16, C08G 77/38, C08K 5/10, C08K 5/101, C09D 183/06

(54) **AN ANTI-SCRATCH ADDITIVE FOR A POLYMER COMPOSITION**

(71) Applicant: Clariant International Ltd, 4132 Muttenz (CH)
(72) Inventor: Pandey, Someshwarnath Dinanath, 421503 Maharashtra (IN); Gholam, Smita Amit, 400057 Maharashtra (IN)
(74) Representative: Silber, Anton

(57) **Abstract**

The present invention provides an additive, particularly for anti-scratch applications comprising,
a) At least one silicone ester of Formula I: 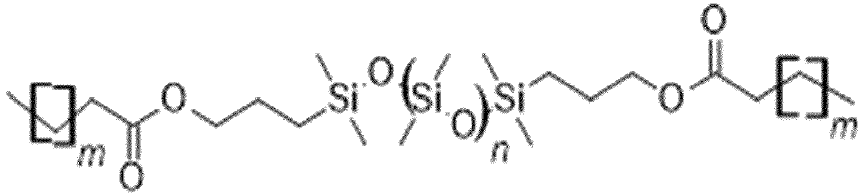 wherein n = 1 - 24; m = 3-22; and,
b. At least one fatty acid ester;
wherein the average molecular weight of the silicone ester is in the range of 800 - 3200 Da;
wherein the-thermal degradation temperature of the said additive is in the range of 180 - 400°C.

Also provided are polymeric compositions comprising these additives, process of preparing the polymeric compositions and uses thereof.

## Description

### Field of the invention

The invention relates to additives used in polymer compositions for providing an anti-scratch benefit. The invention also relates to compositions that comprise the additives having an anti-scratch property.

### Background of the invention

Polymers are prone to mar and scratches which create an impression of comparably low quality. Additionally, dust and dirt tend to find their way into the rough surfaces accounting for a less hygienic environment and a reduction of the mechanical properties. Polycarbonate resins have been widely used as engineering plastic material. However, they also have low scratch resistance.

Conventionally, various anti-scratch additives such as fatty acid amides are used to preserve the perceived quality of the surface of polymer compositions and their mechanical properties. However, the conventional additives are expensive and less effective in providing the anti-scratch resistance. Further, these additives are associated with certain drawbacks such as discoloration of the polymeric compositions and low sustainability.

US 7,026,391 discloses a polymer composition comprising (A) from about 55% to about 75% by weight of at least one polyolefin, (B) from about 2% to about 12% by weight of at least one reaction product of an alpha, beta unsaturated carboxylic reagent and a polyolefin, and (C) from 15% to about 35% by weight of filler. In one aspect, the polymer composition also includes (D) at least one copolymer of ethylene and an olefin, (E) at least one polyamide, or (F) admixture of (D) and (E). These compositions provide articles and films with improved scratch resistance and hardness.

WO 2007/039421 discloses a scratch resistant polymer and coating compositions. Polymer substrates are made scratch resistant by the incorporation therein of an additive combination of a carboxylic acid reagent functionalized olefin polymer or copolymer and a primary or secondary fatty acid amide. However, use of the amide additive in the polyolefin causes discoloration during injection molding at high temperature.

WO 2013/072370 relates to the silicone resins comprising metallosiloxane which contains Si-O-Metal bonds or borosiloxane containing Si-O-B bonds and potentially Si-O-Si and/or B-O-B bonds and sulphur. The silicone resins are used in thermoplastic or thermosetting organic polymer or rubber or thermoplastic/rubber blend compositions to reduce the flammability or enhance the scratch and/or abrasion resistance of the organic polymer compositions. However, these silicone-based additives are expensive and not sustainable.

US5527479 describes lubricating compositions comprising silicone oil, a fatty acid-modified silicone and a fatty acid ester. These compositions are used for coating a magneto-optical recoding medium to reduce the friction between the medium and the magnetic head. The fatty acid-modified silicones used to prepare these compositions have a high molecular weight and the fatty acid esters are obtained by esterification of fatty acids with linear alcohols.

There is, therefore, a need to develop an efficient and economical additive having anti-scratch properties and a polymer composition comprising such an additive with anti-scratch properties. Applicants have surprisingly found that the additives of the present invention and polymer compositions comprising these additives exhibit good scratch resistance and weatherability, good processability, compatibility with matrix resins, mechanical strength, gloss retention and are non-sticky.

### Summary of the invention

In one aspect the present invention provides for an additive having anti-scratch property.

In another aspect the present invention provides for a polymeric composition comprising an additive having anti-scratch property.

In yet another aspect the present invention provides a process for preparing a polymeric composition comprising the additive having anti-scratch property.

In yet another aspect the present invention provides the use of the additive having anti-scratch property to enhance the scratch resistance of a polymer.

Further advantages of the present invention will be apparent to those skilled in the art from the description given below.

### Detailed description of the invention

As described herein, "comprising" means that other steps and other ingredients can be in addition. The compositions, formulations, methods, uses, kits, and processes of the present invention can comprise, consist of, and consist essentially of the elements and limitations of the invention described herein, as well as any of the additional or optional ingredients, components, steps, or limitations described herein. Embodiments and aspects described herein may comprise or can be combined with elements, features or components of other embodiments and/or aspects despite not being expressly exemplified in combination, unless an incompatibility is stated. "In at least one embodiment" means that one or more embodiments, of the present invention has/have the subsequently described feature.

"Monomer" means a discrete, non-polymerised chemical moiety capable of undergoing polymerisation in the presence of an initiator or any suitable reaction that creates a macromolecule e.g., such as polycondensation, polyaddition, anionic or cationic polymerization. "Unit" means a monomer that has already been polymerised i.e., part of a polymer.

"Polymer" means a chemical formed from the polymerisation of one or more monomers. The term "polymer" shall include all materials made by the polymerisation of monomers as well as natural polymers. Polymers made from only one type of monomer are called as homopolymers. Herein, a polymer comprises at least two monomers. Polymers made from two or more different types of monomers are called copolymers. The distribution of the different monomers can be random, alternating or block-wise (i.e. block copolymer). The term "polymer" used herein includes any type of polymer including homopolymers and copolymers.

As used herein, "DL* value" refers to the difference in the brightness of the polymer before and after scratching the surface. The brightness is measured with a colorimeter (as per PV 3952:2015).

All percentages are by weight (w/w) of the total composition. All ratios are expressed as weight ratios. "wt.%" means percentage by weight.

Polymeric materials are becoming more and more popular. However, they are prone to scratches and these scratches spoil the look and feel of the polymeric materials. Anti-scratch additives preserve the look and feel of the plastic surfaces and, also increase their lifetime. Conventional anti-scratch additives in the form of amides cause discoloration of the polypropylenes.

The present disclosure, therefore, provides an efficient and economical additive having an anti-scratch property and a polymeric composition comprising the additive having the anti-scratch property.

In accordance with the present disclosure, silicone esters in combination with fatty acid esters have competitive physical properties as anti-scratch additives, which after incorporation in the polymer composition provide a polymeric composition with anti-scratch benefits.

Accordingly, the present invention relates to an additive, particularly for anti-scratch applications comprising,
a. At least one silicone ester of formula I: 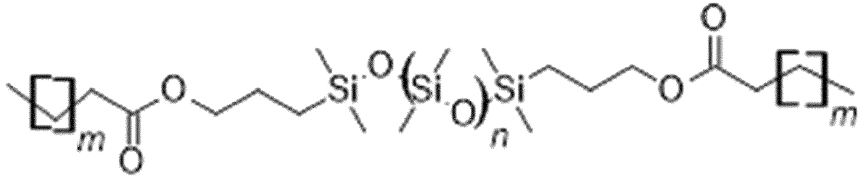 wherein n = 1 - 24; m = 3 - 22; and
b. At least one fatty acid ester;
   wherein the average molecular weight of the silicone ester is in the range of 800 - 3200 Da;
   wherein the-thermal degradation temperature of the said additive is in the range of 180 - 400°C.

As used herein, "n" represents the degree of polymerization of the polysiloxane block of the silicone ester of formula I.

In a preferred embodiment, n is in a range from 3 to 20, more preferably from 6 to 15.

As used herein, "m" represents the hydrocarbon chain length of the fatty acid used for esterification of the hydroxyl terminated polysiloxane block of the silicone ester of formula I.

In a preferred embodiment, m is in a range from 5 to 20, more preferably from 7 to 19, most preferably from 10 to 19.

In one embodiment, the additive consists of:
a. At least one silicone ester of Formula I, and
b. At least one fatty acid ester.

The silicone ester is basically synthesized by hydrosilylation of allyl alcohol with dihydrosiloxane to obtain siloxane diol which is further esterified with higher chain fatty acids.

Examples of suitable dihydrosiloxanes that can be used in accordance with the present invention include, but are not limited to hydrogen terminated poly(dimethylsiloxane) (SiSiB^{®} HF 2030, Power Chemical Corporation Ltd.), 1,1,3,3-tetramethyldisiloxane, 1,1,3,3,5,5-hexamethyl trisiloxane, and siloxanes having repeating units of -[O-Si(CH₃)₂]ₙ ranging from 2 to 25.

The siloxane diol may optionally be directly obtained from known commercial sources.

The silicone ester of the present invention is a condensation product of at least one fatty acid and at least one siloxane diol. The reaction of the fatty acid and the siloxane diol forms a silicone ester characterized by an acid value of less than 10 mg KOH/g. Lower acid values indicate the complete formation of the silicone ester, which is free of fatty acids. An incomplete formation of the silicone ester with the presence of the fatty acid decreases the anti-scratch property of the additive.

Examples of suitable fatty acids that may be used in the present invention are aliphatic acids with carbon chain length from C₉-C₂₂. The fatty acids may be saturated or unsaturated fatty acids, mono-unsaturated, di-unsaturated, tri-unsaturated, tetraunsaturated, penta-unsaturated or hexa-unsaturated. Preferably, the fatty acids are selected from the group consisting of pelargonic acid, capric acid, undecylic acid, lauric acid, tridecylic acid, myristic acid, pentadecylic acid, palmitic acid, margaric acid, behenic acid, stearic acid, nonadecylic acid, arachidic acid, heneicosylic acid, myristoleic acid, palmitoleic acid, sapienic acid, elaidic acid, vaccenic acid, oleic acid, gadoleic acid, eicosenoic acid, paullinic acid, erucic acid, linoleic acid, eicosadienoic acid, linolelaidic acid, docosadienoic acid, α- and γ-linolenic acid, pinolenic acid, α- and β-eleostearic acid, mead acid, dihomo-γ-linolenic acid, eicosatrienoic acid, stearidonic acid, arachidonic acid, eicosatetraenoic acid, adrenic acid, bosseopentaenoic acid, eicosapentaenoic acid, ozubondo acid, clupanodonic acid, and docosahexaenoic acid, and mixtures thereof.

Long chain fatty acids react with siloxane diol to form fatty acid silicone esters. Ester group and siloxane present in the fatty acid silicone esters induce low surface energy characteristics in the molecule by virtue of which, the silicone esters acquire surface active properties.

Preferably, the silicone ester is present in the additive in an amount ranging from 50-80% by weight of the additive. In one embodiment, the silicone ester is present in the additive in an amount of from 65 to 77% by weight of the additive.

In one embodiment the additive having an anti-scratch property maybe prepared by the steps comprising:
a) preparation of the silicone ester,
   i. providing a siloxane diol having 2 to 25 SiO(CH₃)₂ repeating units,
   ii. esterification of the siloxane diol with a fatty acid having 6 to 25 carbon atoms in its chemical formula,
b) blending the silicone ester with a fatty acid ester to form the additive.

In one embodiment the silicone ester maybe prepared by following the steps described above. In another embodiment, the silicone ester maybe sourced from known commercial sources.

Polymers and silicone esters are incompatible with each other due to difference in their polarities. Hence, they cannot be directly combined, and the silicone esters need to be mixed with other components to improve the compatibility with the polymers into which they may be added.

In accordance with the embodiments of the present disclosure, one or more silicone esters are further combined with one or more fatty acid esters in a ratio in the range of 4:1 to 1:1. These esters are added to achieve better compatibility with the polymer and they work synergistically to improve the scratch resistance due to better migration properties. This combination of one or more silicone esters and one or more fatty acid esters makes the additive compatible with many of the commercially available polymers when incorporated into it.

Suitable fatty acid esters that may be used in accordance with the present invention are fatty acid esters of alcohols. The fatty acids may be selected from pelargonic acid, capric acid, undecylic acid, lauric acid, tridecylic acid, myristic acid, pentadecylic acid, palmitic acid, margaric acid, behenic acid, stearic acid, nonadecylic acid, arachidic acid, heneicosylic acid, myristoleic acid, palmitoleic acid, sapienic acid, elaidic acid, vaccenic acid, oleic acid, gadoleic acid, eicosenoic acid, paullinic acid, erucic acid, linoleic acid, eicosadienoic acid, linolelaidic acid, docosadienoic acid, α- and γ-linolenic acid, pinolenic acid, α- and β-eieostearic acid, mead acid, dihomo-γ-linolenic acid, eicosatrienoic acid, stearidonic acid, arachidonic acid, eicosatetraenoic acid, adrenic acid, bosseopentaenoic acid, eicosapentaenoic acid, ozubondo acid, clupanodonic acid, and docosahexaenoic acid, and mixtures thereof.

Examples of alcohols include fatty alcohols, diols, triols, and tetraols. Suitable examples of alcohols include, but are not limited to, trimethylol propane, glycerol, pentaerythritol, sorbitol, ethylene glycol, myristil alcohol, lauryl alcohol, stearyl alcohol, palmityl alcohol, behenyl alcohol, and the like. In at least one embodiment, the ester is a behenic acid ester.

In a preferred embodiment, the one or more fatty acid esters are present in the additive in an amount ranging from 20 to 50% by weight of the total weight of the additive. In one embodiment, the fatty acid esters are present in the additive in an amount of from 23 to 35% by weight of the total weight of the additive.

During the process of the extrusion the additive gets uniformly distributed in the polymer due to higher extrusion temperatures. However, as the polymer starts cooling down, the additive starts migrating towards the surface of the polymer and forms a lubricating layer. This so-formed lubricating layer reduces friction at the surface resulting in the minimization of scratches on impact. The migrating efficiency of the additive depends upon the molecular weight and the surface energy of the silicone ester. Lower molecular weight improves migration properties and low surface energy reduces surface friction. Silicone esters of the present invention possess low surface energy and have low molecular weight and, therefore, impart superior anti-scratch property to the polymers.

The present invention also provides for polymeric compositions comprising the additive according to the invention.

The polymeric composition of the present invention comprising the additive can improve the surface properties of an article formed from the composition, in particular the resistance to scratch.

Examples of suitable polymers that may be used as base polymers of the polymeric composition include, but are not limited to, polyisobutylene, polybut-1-ene, poly-4-methylpent-1-ene, polyisoprene, polybutadiene, polypropylene (PP), polyethylene (PE), high density polyethylene (HDPE), linear low density polyethylene (LLDPE), talcfilled polyethylene, polypropylene random, polyethylene terephthalate, polycarbonate, polystyrene, ABS polymer and impact (heterophasic) copolymers and mixtures thereof. In accordance with an exemplary embodiment of the present disclosure, the polymer is polypropylene.

Preferably, the polymer is present in the composition in an amount of from 50 to 99 % by weight of the total weight of the polymeric composition. In one embodiment, the polymer is present in the polymeric composition in an amount of from 70 to 99 % by weight of the total weight of the composition. In yet another embodiment, especially in the case of a masterbatch, the polymer is present in the polymeric composition in an amount of from 50 to 75% by weight, preferably 55 to 70% by weight of the total weight of the composition. Masterbatches, by which is meant concentrated preparations of additives which may be added to polymeric materials prior to the production of articles therefrom to give a desired effect in the mass to the articles, are well known to and widely used by the plastics industry.

Preferably, the additive is present in the polymeric composition in an amount ranging from 1 to 30% by weight of the total weight of the polymeric composition. In one embodiment, the additive is present is the polymeric composition in an amount ranging from 1 to 5% by weight of the total weight of the polymeric composition. Preferably, the additive is present in a masterbatch composition in an amount ranging from 20 to 30% by weight, more preferably 25 to 30% by weight of the total weight of the masterbatch composition.

In a third aspect, the present invention also provides a process for preparing a polymeric composition comprising the additive according to the invention having an anti-scratch property, comprising:
a) providing the additive according to the invention,
b) compounding the additive with at least one polymer.

In one embodiment, the additive and polymer are incorporated into the polymeric composition of the present invention as a masterbatch. The masterbatch may additionally comprise one or more of other additives such as talc, fillers, pigments, plasticizers, lubricants, emulsifiers, flow-control agents, slip agents, and the like in an amount ranging from 0.01 to 40 %.

The polymeric composition of the present invention can further include one or more of other auxiliaries to improve or enhance the function or processing. Non-limiting examples of auxiliaries include talc, fillers, UV absorbers, light stabilizers based on sterically hindered amines, flame retardants, quenchers, antioxidants, pigments, acid scavengers, ignition resistant additives, antioxidants, photostabilizers, colouring substances, antistatic agents, dispersing agents, mold-release agents, copper inhibitors, nucleating agents, plasticizers, lubricants, emulsifiers, optical brighteners, rheology additives, catalysts, flow-control agents, slip agents, crosslinking agents, crosslinking boosters, halogen scavengers, smoke inhibitors, clarifiers or blowing agents. If used, such additives may be present in an amount ranging from about 0.01 to about 25 % by weight, preferably from about 0.1 to about 20 % by weight, more preferably from about 1 to about 15 % by weight, more preferably from about 2 to about 12 % by weight, and most preferably from about 5 to about 10 % by weight, based on the total weight of the polymer composition.

Scratch resistance is an important characteristic of articles made from polymeric materials for many applications and is widely used as a key critical performance property. Various instruments and test methods have been developed to quantify and rank scratch resistance with respect to the imposed scratch conditions. In general, two different types of scratch resistance tests can be recognized. A first type of testing typically includes contacting the surface with abrasive slurries, or with abrasive powders or paper. It is sometimes held that such a test characterizes mar resistance rather than scratch resistance. In a second type of testing single-probe devices, with a well-defined tip or needle, are applied to make a limited number of surface cuts. Scratch resistance is typically measured by assessing surface appearance changes brought about by the friction- or probe-induced damage. Scratch resistance assessment is generally based on relative and qualitative types of measurements that aim to identify the optical contrast between the damaged area and its surroundings, such as by visual inspection, gloss changes, and changes in gray scale level or lightness. An ideal polymeric material would show good resistance to both types of induced damage.

L*, a*, b* color values which provide a complete numerical descriptor of the color, in a rectangular coordinate system, have been used to demonstrate anti-scratch property in the present invention. L* represents lightness with 0 being a perfect black of 0% reflectance or transmission; 50 a middle gray; 100 a perfect white of 100% reflectance or a perfect clear of 100% transmission. a* represents rednessgreenness of the color. Positive values of a* are red; negative values of a* are green; 0 is neutral. b* represents yellowness-blueness of the color. Positive values of b* are yellow; negative values of b* are blue; 0 is neutral.

Delta L* ("DL*"), delta a* ("da*") and delta b* ("db*") values provide a complete numerical descriptor of the color differences between a Sample or lot and a Standard or target color. DL* represents a lightness difference between sample and standard colors, da* represents a redness or greenness difference between sample and standard colors, and db* represents blueness-yellowness difference between sample and standard colors. In the case of DL*, da*, db*, the higher the value, the greater the difference in that dimension. In accordance with the embodiments of the present disclosure, the polymeric composition comprising the additive has the DL* value less than 4. (as per the procedure described for Scratch resistance in PV3952:2015).

In certain preferred embodiments, the thermal degradation temperature of the additives of the present invention as measured by the Thermogravimetric analysis, ranges from about 180 - 400 °C, more preferably from 200 - 400 °C, and most preferably from 220 - 350 °C.

The polymeric composition comprising the additive can be formed into an article. The article can be a molded article or an extruded article to take any shape or form. As a molding method, the conventional method such as extrusion molding, injection molding, blow molding, calendar molding, and compression molding is employed to obtain a molded product having a desired shape. Molded article includes moldings, rotomolded articles, injection molded articles, blow molded articles and the like. Extruded articles include blown film extruded articles such as sheets, films, and the like. In an extrusion process, the composition is melt-mixed. For melt-mixing, a single-screw extruder, twin-screw extruder, kneader, Banbury mixer or the like may be used. Although the mixing conditions are not particularly limited, the composition is preferably mixed at a temperature of 120 to 350 °C. The mixed composition is pelletized in a desired shape such as a cylinder, prism, sphere and the like.

The composition and the resulting articles find a wide variety of applications. For example, articles include exterior and interior automotive parts, for example, bumper beams, bumper fascia, pillars, instrument panels and the like; in electrical and electrical equipment device housings and covers; as well as other household and personal articles, including, for example, appliance housings, housewares, household furniture, luggage articles, beverage bottles, freezer containers, and crates; lawn and garden furniture; and building and construction sheets. In a specific embodiment, the composition is molded into parts that may be used in the interior of an automobile, such as a console, steering column cover, driver lower cover, column cover lower, column cover upper, side cover right, side cover left, center lower cover, center lower garnish, defroster duct, glove box, duct outlet and tailgate lower. In another embodiment, the composition is molded into packaging material for home care and personal care products such as bottles, caps, nozzles, pumps, and the like.

The foregoing description of the embodiments has been provided for purposes of illustration and is not intended to limit the scope of the present disclosure. Individual components of a particular embodiment are generally not limited to that particular embodiment, but, are interchangeable. Such variations are not to be regarded as a departure from the present disclosure, and all such modifications are considered to be within the scope of the present disclosure.

The present disclosure is further described in light of the following experiments which are set forth for illustration purpose only and not to be construed for limiting the scope of the disclosure. The following experiments can be scaled up to industrial/commercial scale and the results obtained can be extrapolated to industrial scale.

### Test methods -

### Test method 1 - Assessment of thermal degradation temperature using Thermogravimetric Analysis (TGA) -

Thermogravimetric Analysis is a technique in which the mass of a substance is monitored as a function of temperature or time as the sample specimen is subjected to a controlled temperature program in a controlled atmosphere.

The curve is plotted with time or temperature on X-axis and the weight (mg) or weight percent on the Y-axis. The TGA thermal curve is displayed from left to right. The descending TGA thermal curve indicates the occurrence of a weight loss.

Thermogravimetric analysis (TGA) was performed in wt.%. The sample was heated from 30 to 990 °C at 10 °C/minute in Nitrogen atmosphere with a purge rate of 20 ml/minute. Weight loss was measured on reaching 990 °C and after 30 min at 990 °C.

5.2 mg sample of the additive of the present invention was analyzed for thermal degradation temperature as per the Thermogravimetric analysis.

### Test method 2 - Molecular weight analysis using Gel Permeation Chromatography (GPC) -

Sample preparation - 20 mg of sample dissolved in 10 ml THF was analyzed via GPC. Standard was polystyrene standard, Standard was prepared - by dissolving 20 mg standard in 10 ml THF.

Mobile phase used was THF at a Flow rate of 1 ml/ min. Column used was HSPgel RT column, and run time was 60 minutes.

### Test method 3 - Assessment of melting point using Differential Scanning Calorimetry (DSC) -

Differential scanning calorimetry (DSC) is a thermoanalytical technique in which the difference in the amount of heat required to increase the temperature of a sample and reference is measured as a function of temperature. Both the sample and reference are maintained at nearly the same temperature throughout the experiment. DSC is used widely for examining polymeric materials to determine their thermal transitions. Important thermal transitions include the glass transition temperature (*T*_{g}), crystallization temperature (*T*_{c}), and melting temperature (*T*ₘ).

1.8 mg sample was analyzed via DSC. The temperature Program = Heat from 30 °C to 350 °C @ 10 °C/minute in Nitrogen atmosphere.

### Examples

### Example 1 - Synthesis of siloxane diol bv hydrosilylation of Allyl alcohol with HF2030

Charged 1000 g HF2030 (0.8 moles) in 2-liter RBF reactor under Nitrogen atmosphere at RPM 250. Added 1.0496 g of Karstedt catalyst (sourced from Johnson Matthey) to it with the help of plastic syringe. Added 185.9 g of Allyl alcohol (3.2 moles) drop wise to HF2030 at 80 °C within 60 minutes (rate of addition is 3 g of Allyl alcohol /minute). The molar ratio of HF 2030 to Allyl alcohol is 1:4. It was an exothermic reaction and temperature increased to 85 °C. Then the temperature was maintained at 80 °C until the SiH group of HF2030 reacted with allyl alcohol; the progress of reaction was monitored by FTIR (approx. 2100 cm⁻¹ for Si-H stretching).

It took 6-7 hrs to react completely. Once the SiH group of HF2030 had reacted completely with Allyl alcohol, excess of allyl alcohol was distilled out from reaction mass by vacuum distillation on rotavap. (water bath temp 90 °C, vacuum -1mm). After distillation, filtered the reaction mass through 1cm thickness bed of Celite 545 powder and used the filtrate for step 2. The yield of this siloxane diol - Int-1 was approximately 1092 g. It was a light-yellow coloured liquid. The thermal degradation temperature was 280°C±20 (analysed by the TGA method given in Test method 1).

### Example 2 -Synthesis of siloxane diol by hydrosilylation of Allyl alcohol with 1,1,3,3,5,5-hexamethyl trisiloxane

The process of Example 1 was repeated with 500 g of 1,1,3,3,5,5-hexamethyl trisiloxane (2.39 moles), 3.31 g of Karstedt catalyst and 555.37 g of Allyl alcohol (9.57 moles).

The yield of this siloxane diol - Int-1.1 was approximately 770 g.

### Example 3 - Preparation of the silicone ester - Esterification of siloxane diol of Example 1 with Behenic acid

Charged 1000 g of intermediate of Example 1 - Int-1 (0.7319 moles), 383.9 g behenic acid and 6.919 g Fascat 4100 in 2-liter RBF reactor under Nitrogen atmosphere at RPM 250. The temperature was maintained at 180°C until the acid value decreases to less than 10 mg KOH/g (about 6-7 hours). Approximately 1356 g of the silicone ester (S-1) was obtained as a white coloured wax-like material having a molecular weight of 2900±5 Da (analysed via GPC test method 2).

### Example 4 - Preparation of the silicone ester - Esterification of siloxane diol of Example 2 with Behenic acid

Charged 500 g of intermediate of Example 2 - Int-1.1 (1.54 moles), 807.76 g behenic acid and 14.55 g Fascat 4100 in 2-liter RBF reactor under Nitrogen atmosphere at RPM 250. The temperature was maintained at 190°C till the acid value decreased to less than 10 mg KOH/g (about 6-7 hours). Approximately 1200 g of the silicone ester (S-2) was obtained as a white coloured wax-like material having a molecular weight of 1200±5 Da (analysed via GPC test method 2).

### Example 5 - Preparation of the fatty acid ester -

Charged 162 g Trimethylol propane, 1238 g behenic acid & 7 g Fascat 4100 in 2 litre RBF reactor under Nitrogen atmosphere (RPM 250). The temperature was maintained at 180°C until the acid value decreased to less than 10 mg KOH/g (about 6-7 hours). Approximately 1334 g of the fatty acid ester (FE) was obtained as a white coloured solid material.

### Example 6 - Preparation of the additive (S1-FE) -

Charged 770 g of the silicone ester (S-1) and 230 g of fatty acid ester (FE) in 2 litre RBF at 70 °C and stirred at 300 RPM to completely mix both the esters to form the additive. This additive was cooled to room temperature and cut into small pieces.

Approximately 1000 g of the additive (S1- FE) was obtained as a white coloured wax-like material. The melting point was 33 - 51 °C (analysed via DSC, test method 3) and thermal degradation temperature was 350 ± 5 °C (analysed via TGA, test method 1).

### Example 7 - Preparation of polymer composition comprising the additive

231 g of TPT polymer (talc filled polyethylene), 10 g of the additive fatty acid(S1- FE) from Example 6,53 g of pigment 10039F (30% black pigment in propylene homopolymer PP3155) and 706 g of PPCP MI3530 resin (polypropylene impact

copolymer) were hand mixed to obtain a mixture. The mixture was extruded through twin screw extruder (Make - Lab Tech) fitted with 2.5 mm strand die to obtain strands. The strands thus obtained, were passed through a water bath and cut into cylindrical granules of the size 3 - 4 mm. These granules were further moulded by injection moulding process to obtain plates which were tested for scratch resistance properties.

### Example 8 - Evaluation of scratch resistance properties of the polymer composition prepared in Example 7

The polymer composition in the form of plates obtained in example 7 was subjected to Erichsen Scratch test (PV3952:2015). The test conditions were as follows:
a. Scratch tip: 1 mm;
b. Contact force: 10 N;
c. Scratching speed: 1000 mm/min;
d. Distance between lines of crosshatch patterns: 2 mm; and
e. Width of crosshatch pattern: 40 mm.

The plates obtained in example 7 were scratched in controlled manner with 1 mm scratch tip at 10N pressure by using Erichsen Scratch tester.

The whiteness of scratch was measured by measuring L value (L*a*b* scale) of the scratched & unscratched area of the plates by using a spectrophotometer.

L values were measured at various points along scratched and unscratched areas and the mean calculated for both the values.

A L value of 0 is effectively totally black and 100 is totally white. Subtracting L value of unscratched region from L value of scratched region gives the DL* value, which describes the difference in lightness (or whiteness).

The results are given in table 1 below.

**Table 1: Results of Erichsen Scratch test.**

| Serial No. | Sample Name | Texture | Average DL* Value |
|---|---|---|---|
| 1 (Comp.**) | Blank * | P100 ⁺⁺ | 3.55 |
| 2 (Comp.**) | Blank * | P171 ^{#} | 4.55 |
| 3 (Inv. ***) | 1% Composition of Example 7 | P100 ⁺⁺ | 2.66 |
| 4 (Inv. ***) | 1% Composition of Example 7 | P171 ^{#} | 3.27 |

| | | | |
|---|---|---|---|
| * Blank - Polymer composition plate without additive ⁺⁺ P100 - Texture surface of polymer molded plate ^{#} P171 - Texture surface of polymer molded plate ** Comp. - Comparative Example *** Inv. - Inventive Example | | | |

It can be seen from Table 1 that the inventive examples (Serial. No. 3 and 4) have a lower average DL* Value and therefore show a higher scratch resistance than the comparative examples (Serial. No. 1 and 2).

## Claims

1. An additive for anti-scratch applications comprising,
a) At least one silicone ester of Formula I: 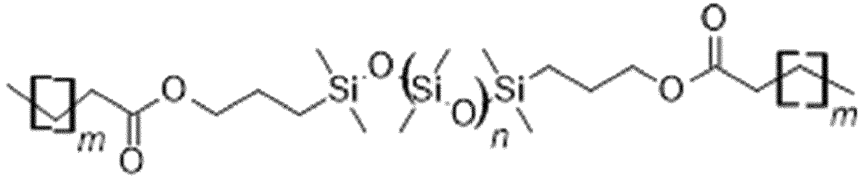 wherein n = 1 - 24; m = 3-22; and,
b. At least one fatty acid ester;
wherein the average molecular weight of the silicone ester is in the range of 800 - 3200 Da;
wherein the-thermal degradation temperature of the said additive is in the range of 180 - 400°C.

2. An additive according to claim 1, wherein the additive consists of:
c. At least one silicone ester of Formula I, and
d. At least one fatty acid ester.

3. An additive according to claims 2 or 3, wherein the weight ratio of the silicone ester to the fatty acid ester is 4:1 to 1:1.

4. An additive according to any of the preceding claims, wherein the silicone ester comprises at least one fatty acid and at least one siloxane diol.

5. An additive according to any of the preceding claims, wherein the acid value of the silicone ester is less than 10 mg KOH/g.

6. An additive according to any of the preceding claims, wherein the siloxane diol comprises of dihydrosiloxanes selected from hydrogen terminated poly dimethyl siloxane, 1,1,3,3-tetramethyldisiloxane, 1,1,3,3,5,5-hexamethyl trisiloxane, and siloxanes having repeating units of -[O-Si(CH₃)₂]ₙ ranging from 2 to 25.

7. An additive according to any of the preceding claims, wherein the fatty acid in the silicone ester is an aliphatic acid with carbon chain length from C₉-C₂₂.

8. An additive according to any of preceding claims, wherein the silicone ester is present from about 50 to 80% in the additive.

9. An additive according to any of the preceding claims, wherein the fatty acid ester is a fatty acid ester of alcohols selected from trimethylol propane, glycerol, pentaerythritol, sorbitol, ethylene glycol, myristil alcohol, lauryl alcohol, stearyl alcohol, palmityl alcohol, and behenyl alcohol.

10. An additive according to any of the preceding claims, wherein the fatty acid esters are present in the additive in an amount ranging from 20 - 50%.

11. A process for making the additive of claim 1 comprising,
a) preparing the silicone ester,
i. providing a siloxane diol having 2 to 25 SiO(CH₃)₂ repeating units,
ii. esterifying the siloxane diol with a fatty acid having 6 to 25 carbon atoms in its chemical formula,
b) blending the silicone ester with a fatty acid ester to form the additive.

12. A polymeric composition comprising the additive of claim 1 and at least one polymer.

13. A polymeric composition as claimed in claim 12, wherein the polymer may be selected from polyisobutylene, polybut-1-ene, poly-4-methylpent-1-ene, polyisoprene, polybutadiene, polypropylene (PP), polyethylene (PE), high density polyethylene (HDPE), linear low density polyethylene (LLDPE), talcfilled polyethylene, polypropylene random, Polyethylene terephthalate, polycarbonate, polystyrene, ABS polymer and impact (heterophasic) copolymers and mixtures thereof.

14. A polymeric composition according to any of the claims 12 or 13, wherein the composition comprises from 1 to 30% of the additive by weight of the total weight of the composition.

15. A polymeric composition according to any of the claims 12-14, wherein the said composition has a DL* value of less than 4, measured according to PV3952:2015.

16. A polymeric composition according to any of the claims 12-15, wherein the composition is a masterbatch comprising 20 - 30% of the additive by weight of the total weight of the composition.

17. A process for making a polymeric composition comprising an additive of claim I, comprising:
a) providing an additive as claimed in claim 1,
b) compounding the additive with at least one polymer.

18. Use of the additive as claimed in any of the preceding claims 1-10, to enhance the scratch resistance of a polymeric composition.
